# EUROPEAN PATENT APPLICATION

(11) **EP 4 512 520 A1**
(43) Date of publication of application: **26.02.2025**
(21) Application number: 23812128.9
(22) Date of filing: 24.05.2023
(51) Int. Cl.: B01J 19/00, B01J 19/32, B01D 35/02, C01G 53/00, H01M 4/525

(54) **PRECURSOR PREPARATION DEVICE AND PRECURSOR PREPARATION METHOD**

(30) Priority: 24.05.2022 KR 20220063154; 23.05.2023 KR 20230066005
(71) Applicant: LG Chem, Ltd., Yeongdeungpo-gu Seoul 07336 (KR)
(72) Inventor: KIM, Woo Hyun, Daejeon 34122 (KR); NOH, Joon Ho, Daejeon 34122 (KR); KIM, Seong Bae, Daejeon 34122 (KR); MOON, Chang Jun, Daejeon 34122 (KR)
(74) Representative: Hoffmann Eitle
(86) International application number: PCT/KR2023/007039
(87) International publication number: WO 2023/229354

(57) **Abstract**

The present invention relates to a precursor preparation device and a precursor preparation method. The precursor preparation device for preparing a precursor by co-precipitating a raw material, according to the present invention, comprises: a co-precipitation reaction tank in which accommodation materials including a reactant and a filtrate are accommodated; and a pH measurement system for measuring the pH of the filtrate, wherein the pH measurement system comprises: a filter which is positioned inside the co-precipitation reaction tank, and which filters out the filtrate from the accommodation material; and a pH measurement unit positioned outside of the co-precipitation reaction tank so as to measure the pH of the filtrate filtered out through the filter.

## Description

### TECHNICAL FIELD

### CROSS-REFERENCE TO RELATED APPLICATION

The present application claims the benefit of the priority of Korean Patent Application Nos. 10-2022-0063154, filed on May 24, 2022, and 10-2023-0066005, filed on May 23, 2023, which are hereby incorporated by reference in their entirety.

### TECHNICAL FIELD

The present invention relates to an apparatus and method for preparing a precursor.

### BACKGROUND ART

As the technical development of and a demand for mobile devices increase, a demand for secondary batteries as energy sources rapidly increases. Among the secondary batteries, lithium secondary batteries having high energy density, high discharge voltage, long cycle life, and low self-discharge rate are commercialized and widely used.

Lithium transition metal oxides are used as positive electrode active materials of the lithium secondary batteries. Among the lithium transition metal oxides, LiCoO₂ as a lithium cobalt oxide, which has a high working voltage and excellent capacity characteristics, is mainly used. However, since LiCoO₂ has very poor thermal properties due to crystal structure destabilization resulting from delithiation and is very expensive, there is a problem in using a large amount of LiCoO₂ as power sources in the areas such as electric vehicles.

Lithium manganese oxides (LiMnO₂, LiMn₂O₄ or the like), lithium iron phosphate compounds (LiFePO₄ or the like), lithium nickel oxides (LiNiO₂ or the like) or the like are developed as materials for replacing LiCoO₂. Among the materials, research on and development of the lithium nickel oxides, which have a high reversible capacity of about 200 mAh/g to easily achieve batteries having a large capacity, are more actively carried out. However, compared to LiCoO₂, LiNiO₂ has poor thermal stability, and has a problem that, when internal short-circuit occurs due to pressure or the like from the outside in a charge state, a positive electrode active material itself decomposes to cause bursting and ignition of the batteries.

Accordingly, LiNi₁-αCoαO₂ (α=0.1-0.3) in which part of nickel is substituted with cobalt, or nickel-cobalt-manganese (NCM)-based lithium composite metal oxides in which part of nickel is substituted with Mn and Co, are developed as a solution to maintain the excellent reversible capacity and improve the low thermal stability of LiNiO₂. In addition, lithium transition metal oxides having a concentration gradient of a metal composition are also proposed to achieve excellent output characteristics and solve the stability problem caused by elution or the like of metal elements.

When preparing an NCM precursor to which an existing coprecipitation reaction is applied according to the related art, a pH is controlled to prepare the precursor in which growth of particles, growth of primary particles, and sphericity are controlled. In the preparation of the precursor, the pH is a parameter to be essentially managed for improvement of performance of a positive electrode material, e.g., improvement of the battery performance such as a cycle life and gas generation, as effects that uniform degrees of sintering and particle intensity are improved when firing burning the positive electrode material.

Actually, however, due to lack of durability of a pH sensor and lack of reliability of a pH value in a reactor, a worker performs sampling and uses an external pH sensor to manage the pH, and thus, redundancy of the work and fatigability increase. Moreover, since the internally mounted pH sensor has reliability insufficient to be reused, the pH sensor is discarded after a single use, or is highly likely to be issued in breakage and a contact defect during reaction, which lead to a defect of the precursor.

### DISCLOSURE OF THE INVENTION

### TECHNICAL PROBLEM

One aspect of the present invention is to provide an apparatus and method for preparing a precursor, capable of improving pH analysis reliability.

### TECHNICAL SOLUTION

An apparatus for preparing a precursor according to an embodiment of the present invention is an apparatus for preparing a precursor, which coprecipitation reacts a raw material to prepare the precursor, the apparatus including: a coprecipitation reaction tank in which an accommodated material including a reactant and a remainder is accommodated; and a pH measuring system that measures a pH of the remainder, wherein the pH measuring system includes: a filter that is disposed inside the coprecipitation reaction tank and filters the remainder from the accommodated material; and a pH measuring part that is disposed outside the coprecipitation reaction tank to measure the pH of the remainder filtered through the filter.

A method for preparing a precursor according to an embodiment of the present invention is a method for preparing a precursor, which coprecipitation reacts a raw material to prepare the precursor, the method including: an accommodating process of accommodating, in a coprecipitation reaction tank, the raw material that forms an accommodated material including a reactant and a remainder; and a pH measuring process of measuring a pH of the remainder, wherein the pH measuring process includes: a filtering process of filtering the remainder from the accommodated material by a filter disposed inside the coprecipitation reaction tank; and a measuring process of measuring the pH of the remainder, which is filtered through the filter, by a pH measuring part disposed outside the coprecipitation reaction tank.

### ADVANTAGEOUS EFFECTS

According to the present invention, in the pH measuring system applied to the apparatus for preparing the precursor, which prepares the precursor through the coprecipitation reaction, the pH measuring part may be configured to be capable of measuring the pH outside the coprecipitation reaction tank so that the pH sensor that measures the pH is prevented from being broken to improve the analysis reliability and reduce the costs of breakage of the pH sensor.

### BRIEF DESCRIPTION OF THE DRAWINGS

FIG. 1 is a front view illustrating an apparatus for preparing a precursor according to an embodiment of the present invention.
FIG. 2 is a front view illustrating a pH measuring system in an apparatus for preparing a precursor according to an embodiment of the present invention.
FIG. 3 is a front view illustrating a pH measuring part in a pH measuring system of an apparatus for preparing a precursor according to an embodiment of the present invention.

### MODE FOR CARRYING OUT THE INVENTION

The above and other aspects, features and other advantages of the present invention will be more clearly understood from the following detailed description and preferred embodiments taken in conjunction with the accompanying drawings. Note that like elements are designated by like reference numerals as far as possible even if they are shown in different drawings. The present invention may be embodied in different forms and should not be construed as limited to the embodiments set forth herein. Moreover, detailed descriptions related to well-known art will be ruled out in order not to unnecessarily obscure subject matters of the present invention.

### Apparatus for preparing precursor according to embodiment

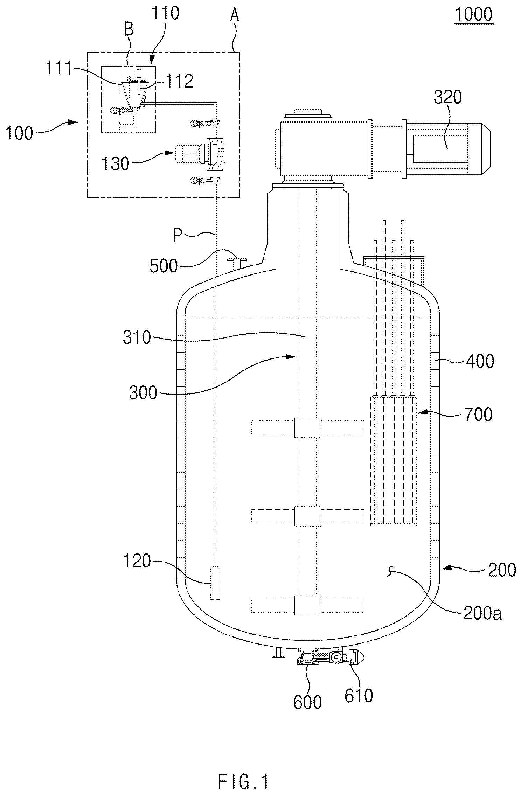

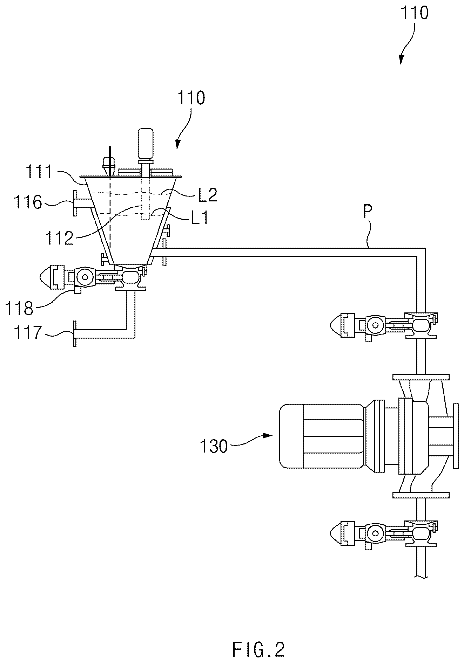

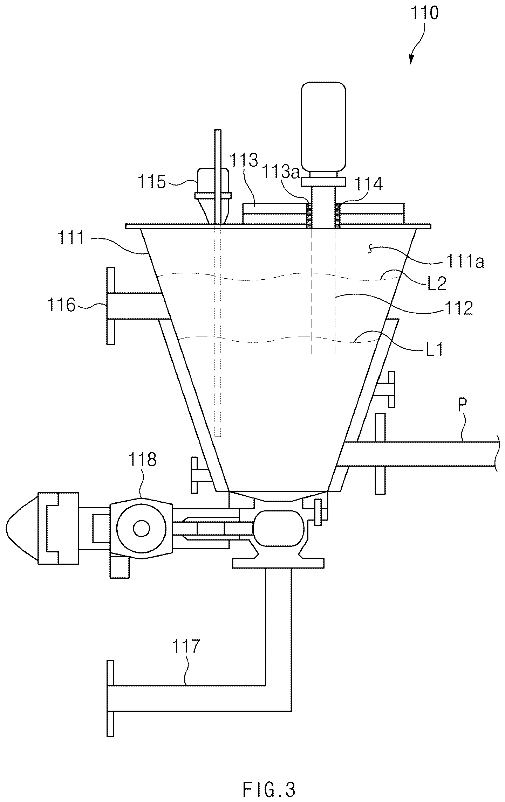

FIG. 1 is a front view illustrating an apparatus for preparing a precursor according to an embodiment of the present invention. FIG. 2 is a front view illustrating a pH measuring system in the apparatus for preparing the precursor according to an embodiment of the present invention. FIG. 3 is a front view illustrating a pH measuring part in the pH measuring system of the apparatus for preparing the precursor according to an embodiment of the present invention. Here, FIGS. 1 to 3 are reference views seeing through the inside of the apparatus. FIG. 2 illustrates an enlarged area A in FIG. 1, and FIG. 3 illustrates an enlarged area B in FIG. 1.

Referring to FIGS. 1 to 3, an apparatus 1000 for preparing a precursor according to an embodiment of the present invention is an apparatus 1000 for preparing a precursor, which coprecipitation reacts a raw material to prepare the precursor. The apparatus 1000 for preparing the precursor includes a coprecipitation reaction tank 200, in which an accommodated material including a reactant and remainder is accommodated, and a hydrogen ion concentration (pH) measuring system 100 that measures a pH of the remainder. The pH measuring system 100 includes a filter 120, which filters the remainder, and a pH measuring part 110 which measures the pH of the remainder. In the apparatus 1000 for preparing the precursor according to an embodiment of the present invention, the pH measuring system 100 may further include a connecting pipe P, which is connected to the pH measuring part 110, and a remainder moving pump 130 which moves the remainder. The apparatus 1000 for preparing the precursor according to an embodiment of the present invention may further include a stirrer 300, a heater 400, a raw material inlet 500, a reactant outlet 600, and a main filter 700.

In more detail, an accommodating part 200a, in which the accommodated material including the reactant and the remainder is accommodated, is defined in the coprecipitation reaction tank 200.

The coprecipitation reaction tank 200 is provided in a can type and, for example, may be provided in a cylindrical type.

The stirrer 300 may stir the raw material accommodated inside the coprecipitation reaction tank 200.

In addition, the stirrer 300 may include a rotating part 310, which is disposed inside the coprecipitation reaction tank 200 to rotate, and a motor part 320 which rotates the rotating part 310. Here, the rotating part 310 may rotate inside the coprecipitation reaction tank 200, and rotate and stir the raw material.

The heater 400 may apply heat to the raw material accommodated inside the coprecipitation reaction tank 200.

Here, the heater 400 may increase the temperature of the raw material to accelerate the coprecipitation reaction. For example, the heater 400 may heat the raw material to a temperature of about 50°C.

For example, the heater 400 may be disposed on a sidewall of the coprecipitation reaction tank 200.

The raw material inlet 500 may be connected to an upper portion of the coprecipitation reaction tank 200 to introduce the raw material into the coprecipitation reaction tank 200. That is, the raw material that is a reacting material may be supplied to the accommodating part 200a of the coprecipitation reaction tank 200 through the raw material inlet 500.

The raw material may include a metal solution, a caustic soda solution, and ammonia water. Here, for example, the metal solution may be a nickel-cobalt-manganese (Ni-Co-Mn) solution, and the caustic soda may be NaOH. In addition, the caustic soda may be a pH adjusting material, and the ammonia water may be a coagulant. Here, an input of the caustic soda may be adjusted according to a pH level of the remainder measured through the pH measuring system 100 to adjust a pH of the accommodated material accommodated in the accommodating part 200a of the coprecipitation reaction tank 200. For example, a pH of the accommodated material accommodated in the accommodating part 200a of the coprecipitation reaction tank 200 may be adjusted so that the pH of the remainder is 10-12, and particles may be grown to prepare the precursor.

The reactant outlet 600 may be connected to a lower portion of the coprecipitation reaction tank 200 to discharge the completely reacted reactant that is disposed inside the coprecipitation reaction tank 200. That is, the prepared precursor that is a reactant may be discharged from the lower portion of the coprecipitation reaction tank 200 through the reactant outlet 600. Here, the precursor may be provided as an NCM (nickel/cobalt/manganese) precursor for a positive electrode active material.

In addition, the reactant outlet 600 may include a reactant discharge valve 610 to adjust the discharge of the reactant.

The main filter 700 may filter a reaction solution disposed inside the coprecipitation reaction tank 200. Here, a precursor reaction and a filtration flow rate may be confirmed while a portion of the reaction solution disposed inside the coprecipitation reaction tank 200 is discharged to the outside of the coprecipitation reaction tank 200 after being filtered through the main filter 700.

The pH measuring system 100 may measure the pH of the remainder accommodated inside the coprecipitation reaction tank 200. Here, the pH measuring system 100 may include the filter 120, the pH measuring part 110, the connecting pipe P, and the remainder moving pump 130.

The filter 120 may be disposed inside the coprecipitation reaction tank 200 and filter the remainder from the accommodated material. That is, when the raw material disposed inside the coprecipitation reaction tank 200 is generated as the reactant and the remainder, which are the accommodated material, through the coprecipitation reaction, the filter 120 may filter the remainder from the accommodated material. Here, in the metal solution that is the raw material, a metal that is a reactant may be precipitated, and the other may be generated as the remainder through the coprecipitation reaction. Here, as one example, the remainder may include water (H₂O). As another example, the remainder may include water (H₂O), ammonia water, Na₂SO₄, and the like.

The filter 120 may be provided as a metal filter made of a metal material. Accordingly, the filter 120 may be prevented from being broken while colliding with the accommodated material accommodated inside the coprecipitation reaction tank 200. In addition, the filter 120 may be prevented from being chemically damaged by the accommodated material in a liquid state, which is accommodated inside the coprecipitation reaction tank 200. Here, the filter 120 may be made of, for example, stainless material.

The pH measuring system 100 may include the pH measuring part 110 that is disposed outside the coprecipitation reaction tank 200 to measure the pH of the remainder filtered through the filter 120. Here, the pH measuring part 110 may include a buffer tank 111, a pH sensor 112, a fixing part 113, a water level sensor 115, a cleaning water inlet 116, and a cleaning water outlet 117.

The buffer tank 111 may be connected to the connecting pipe P to accommodate the remainder filtered through the filter 120. In addition, an accommodating space 111a in which the remainder is accommodated may be defined inside the buffer tank.

The pH sensor 112 may measure the pH of the remainder accommodated in the buffer tank 111.

The fixing part 113 may fix the pH sensor 112 to the buffer tank 111. Here, the fixing part 113 may be provided on an upper portion of the buffer tank to fix the pH sensor 112. In addition, the fixing part 113 may have a through-hole 113a, which is defined therein and through which the pH sensor 112 passes, and may include a rubber packing 114 disposed between the through-hole 113a and the pH sensor 112 so that the pH sensor 112 is press-fitted and coupled to the fixing part 113.

The water level sensor 115 may measure a water level L1 of the remainder accommodated in the buffer tank 111, and a water level L2 of cleaning water.

The cleaning water inlet 116 may be connected to an upper portion of a side surface of the buffer tank 111 to introduce the cleaning water into the buffer tank 111. Accordingly, the inside of the buffer tank 111 may be cleaned using the cleaning water so that the pH of the remainder introduced into the buffer tank 111 for the pH measurement after the cleaning is accurately measured.

The cleaning water inlet 116 may introduce the cleaning water into the buffer tank 111 so that the water level L2 of the cleaning water is higher than the water level L1 of the remainder having introduced into the buffer tank 111. Accordingly, the remainder remaining inside the buffer tank may be completely cleaned up.

In addition, the cleaning water introduced through the cleaning water inlet 116 may be neutralizing liquid having a pH of 7-8. The cleaning water may also include water.

The cleaning water outlet 117 may be connected to a lower portion of the buffer tank 111 to discharge the cleaning water introduced into the buffer tank 111. Here, the cleaning water outlet 117 may discharge the remainder, which is accommodated in the buffer tank 111, before the inside of the buffer tank 111 is cleaned. The cleaning water outlet 117 may include a cleaning water discharge valve 118 that adjusts the discharge of the cleaning water or remainder accommodated inside the buffer tank 111.

The connecting pipe P may have one side portion disposed inside the coprecipitation reaction tank 200 to be connected to the filter 120, and the other side portion extending to the outside of the coprecipitation reaction tank 200 to be connected to the pH measuring part 110.

The remainder moving pump 130 may be provided on the connecting pipe P to move the remainder from the filter 120 to the buffer tank 111.

Therefore, when the apparatus 1000 for preparing the precursor according to an embodiment of the present invention configured as above prepares the precursor through the coprecipitation reaction, the pH measuring part 110 may be configured in the pH measuring system 100 to be capable of measuring the pH outside the coprecipitation reaction tank 200 so that the pH sensor 112 that measures the pH is prevented from being broken to improve the analysis reliability and reduce the costs of breakage of the pH sensor 112.

### Method for preparing precursor according to embodiment

Hereinafter, a method for preparing a precursor according to an embodiment of the present invention will be described.

Referring to FIGS. 1 to 3, the method for preparing the precursor according to an embodiment of the present invention is a method for preparing a precursor, which coprecipitation reacts a raw material to prepare the precursor. The method for preparing the precursor may include an accommodating process of accommodating, in a coprecipitation reaction tank 200, the raw material that forms an accommodated material including reactant and a remainder, and a pH measuring process of measuring a pH of the remainder. The pH measuring process may include a filtering process of filtering the remainder from the accommodated material by a filter 120 disposed inside the coprecipitation reaction tank 200, and a measuring process of measuring the pH of the remainder, which is filtered through the filter 120, by a pH measuring part disposed outside the coprecipitation reaction tank 200.

The method for preparing the precursor according to an embodiment of the present invention is a method for preparing a precursor through the apparatus 1000 for preparing the precursor according to an embodiment of the present invention described above. Thus, this embodiment of the method for preparing the precursor will be described by omitting or simply describing the content duplicated with the embodiment of the apparatus 1000 for preparing the precursor described above, and focusing on differences.

In more detail, in the accommodating process, the raw material that forms the accommodated material including the reactant and the remainder is accommodated in an accommodating part 200a of the coprecipitation reaction tank 200.

In addition, the accommodating process may include a raw material introducing process of introducing the raw material into the coprecipitation reaction tank 200 through a raw material inlet 500 connected to an upper portion of the coprecipitation reaction tank 200. Here, in the raw material introducing process, the raw material that is a reacting material may be supplied to the accommodating part 200a of the coprecipitation reaction tank 200 through the raw material inlet 500.

In addition, the raw material introduced into the coprecipitation reaction tank 200 through the raw material introducing process may be the accommodated material including the reactant and the remainder in the coprecipitation reaction tank 200.

Here, in the accommodating process, the raw material is introduced into the coprecipitation reaction tank 200, and the introduced raw material reacts in the coprecipitation reaction tank 200 to form the accommodated material including the reactant and the remainder so that the accommodated material is accommodated in the coprecipitation reaction tank 200.

The raw material may include a metal solution, a caustic soda solution, and ammonia water. Here, for example, the metal solution may be a nickel-cobalt-manganese (Ni-Co-Mn) solution, and the caustic soda may be NaOH. In addition, the caustic soda may be a pH adjusting material, and the ammonia water may be a coagulant.

In a stirring process, the raw material accommodated inside the coprecipitation reaction tank 200 may be stirred through a stirrer after the accommodating process. More specifically, the stirring process may be performed after the raw material is introduced into the coprecipitation reaction tank 200 through the raw material introducing process in the accommodating process.

Here, a stirrer 300 may include a rotating part 310 disposed inside the coprecipitation reaction tank 200 to rotate, and a motor part 320 that rotates the rotating part 310. Here, the rotating part 310 may rotate inside the coprecipitation reaction tank 200, and rotate and stir the raw material.

In a heating process, heat may be applied to the raw material accommodated inside the coprecipitation reaction tank 200 through a heater during the stirring process or before and during the stirring process.

In the heating process, a temperature of the raw material may be increased through a heater 400 to accelerate the coprecipitation reaction. In the heating process, for example, the heater 400 may heat the raw material to a temperature of about 50°C.

For example, the heater 400 may be disposed on a sidewall of the coprecipitation reaction tank 200.

The pH measuring process may include the filtering process and the measuring process, and the pH of the remainder may be measured through the pH measuring system 100. Here, the pH measuring system 100 may include a filter 120, a pH measuring part 110, a connecting pipe P, and a remainder moving pump 130.

The pH measuring process may be performed after the accommodating process. Specifically, the pH measuring process may be performed after the raw material is introduced into the coprecipitation reaction tank 200 through the raw material introducing process in the accommodating process.

Here, for example, the pH measuring process may be performed in one or more processes of a process before the stirring process, a process during the stirring process, and a process after the stirring process.

In the filtering process, the remainder may be filtered from the accommodated material through the filter 120 disposed inside the coprecipitation reaction tank 200.

In addition, in the filtering process, the filter 120 may be disposed inside the coprecipitation reaction tank 200 to filter the remainder from the accommodated material. That is, when the raw material disposed inside the coprecipitation reaction tank 200 is generated as the reactant and the remainder, which are the accommodated material, through the coprecipitation reaction, the filter 120 may filter the remainder from the accommodated material. Here, in the metal solution that is the raw material, a metal that is a reactant may be precipitated, and the other may be generated as the remainder through the coprecipitation reaction. Here, as one example, the remainder may include water (H₂O). As another example, the remainder may include water (H₂O), ammonia water, Na₂SO₄, and the like.

The filter 120 may be provided as a metal filter made of a metal material. Accordingly, the filter 120 may be prevented from being broken while colliding with the accommodated material accommodated inside the coprecipitation reaction tank 200. In addition, the filter 120 may be prevented from being chemically damaged by the accommodated material in a liquid state, which is accommodated inside the coprecipitation reaction tank 200. Here, the filter 120 may be made of, for example, stainless material.

In the measuring process, the pH of the remainder filtered through the filter 120 may be measured through a pH measuring part 110 disposed outside the coprecipitation reaction tank 200. In addition, the measuring process may include a remainder accommodating process and a sensor measurement process. The measuring process may further include a cleaning water introducing process and a cleaning water discharge process.

In the remainder accommodating process, the remainder filtered through the filter 120 may be accommodated in a buffer tank 111 through a connecting pipe P having one side portion connected to the filter 120 and the other side portion connected to the pH measuring part 110. Here, in the remainder accommodating process, the remainder may be moved from the filter 120 to the buffer tank 111 through a remainder moving pump 130 provided on the connecting pipe P. The buffer tank 111 may be connected to the connecting pipe P to accommodate the remainder filtered through the filter 120. In addition, an accommodating space 111a in which the remainder is accommodated may be defined inside the buffer tank 111.

In the sensor measuring process, the pH of the remainder accommodated in the buffer tank 111 may be measured through a pH sensor 112 of the pH measuring part 110.

In the cleaning water introducing process, when the remainder accommodated in the buffer tank 111 is discharged after the sensor measuring process, cleaning water may be introduced into the buffer tank through a cleaning water inlet, which is connected to an upper portion of a side surface of the buffer tank, to clean the inside of the buffer tank. Here, the cleaning water outlet 117 may discharge the remainder, which is accommodated in the buffer tank 111, before the inside of the buffer tank 111 is cleaned.

Accordingly, the inside of the buffer tank 111 may be cleaned using the cleaning water so that the pH of the remainder introduced into the buffer tank 111 for the pH measurement after the cleaning is accurately measured.

In addition, in the cleaning water introducing process, the cleaning water introduced through a cleaning water inlet 116 may be neutralizing liquid having a PH of 7-8. The cleaning water may also include water.

In the cleaning water introducing process, the cleaning water may be introduced so that a water level of the cleaning water is higher than a water level of the remainder having introduced into the buffer tank through the remainder introducing process.

In the cleaning water introducing process, a water level L1 of the remainder accommodated in the buffer tank 111, and a water level L2 of the cleaning water may be measured through a water level sensor 115 to make the water level of the cleaning water higher. The water level L2 of the cleaning water may be adjusted to be higher than the water level L1 of the remainder accommodated in the buffer tank 111.

In the cleaning water discharge process, the cleaning water introduced into the buffer tank 111 may be discharged through a cleaning water outlet 117 connected to a lower portion of the buffer tank 111.

The method for preparing the precursor according to an embodiment of the present invention may further include a pH adjusting process of adjusting an input of the caustic soda according to a pH level of the remainder measured through the pH measuring process to adjust a pH of the accommodated material accommodated in the accommodating part 200a of the coprecipitation reaction tank 200. In the pH adjusting process, the pH of the accommodated material accommodated in the accommodating part 200a of the coprecipitation reaction tank 200 may be adjusted so that the pH of the remainder is 10-12.

Moreover, in the method for preparing the precursor according to an embodiment of the present invention, the adjusting of the pH of the remainder may be effectively performed while repeatedly performing the pH measuring process and the pH adjusting process. Here, for example, the pH measuring process and the pH adjusting process may be performed in one or more processes of a process before the stirring process, a process during the stirring process, and a process after the stirring process.

The method for preparing the precursor according to an embodiment of the present invention may further include a reaction solution filtering process of filtering a reaction solution disposed inside the coprecipitation reaction tank 200 by a main filter 700.

In the reaction solution filtering process, a precursor reaction and a filtration flow rate may be confirmed while a portion of the reaction solution disposed inside the coprecipitation reaction tank 200 is discharged to the outside of the coprecipitation reaction tank 200 after being filtered through the main filter 700.

Although the present invention has been described in detail with reference to the limited embodiments, the present invention is not limited thereto. The present invention may be variously implemented by those of ordinary skill in the art, to which the present invention pertains, within the technical idea of the present invention.

Moreover, the specific protective scope of the present invention will be clarified by the accompanying claims.

### [Description of the Symbols]

100: PH measuring system
110: PH measuring part
111: Buffer tank
111a: Accommodating space
112: PH sensor
113: Fixing part
113a: Through-hole
114: Rubber packing
115: Water level sensor
116: Cleaning water inlet
117: Cleaning water outlet
118: Cleaning water discharge valve
120: Filter
130: Remainder moving pump
200: Coprecipitation reaction tank
200a: Accommodating part
300: Stirrer
400: Heater
500: Raw material inlet
600: Reactant outlet
1000: Apparatus for preparing precursor
P: Connecting pipe

## Claims

1. An apparatus for preparing a precursor, which is configured to coprecipitation react a raw material to prepare the precursor, the apparatus comprising:
a coprecipitation reaction tank in which an accommodated material comprising a reactant and a remainder is accommodated; and
a pH measuring system configured to measure a pH of the remainder,
wherein the pH measuring system comprises:
a filter disposed inside the coprecipitation reaction tank and configured to filter the remainder from the accommodated material; and
a pH measuring part disposed outside the coprecipitation reaction tank to measure the pH of the remainder filtered through the filter.

2. The apparatus of claim 1, further comprising a connecting pipe having one side portion, which is disposed inside the coprecipitation reaction tank to be connected to the filter, and the other side portion extending to the outside of the coprecipitation reaction tank to be connected to the pH measuring part.

3. The apparatus of claim 2, wherein the pH measuring part comprises:
a buffer tank connected to the connecting pipe to accommodate the remainder filtered through the filter; and
a pH sensor configured to measure the pH of the remainder accommodated in the buffer tank.

4. The apparatus of claim 3, wherein the pH sensor passes through the buffer tank vertically and has a lower portion disposed inside the buffer tank.

5. The apparatus of claim 4, wherein the pH measuring part further comprises a fixing part configured to fix the pH sensor to the buffer tank.

6. The apparatus of claim 5, wherein the fixing part has a through-hole, which is defined therein and through which the pH sensor passes, and comprises a rubber packing disposed between the through-hole and the pH sensor so that the pH sensor is press-fitted and coupled to the fixing part.

7. The apparatus of claim 3, further comprising a remainder moving pump provided on the connecting pipe to move the remainder from the filter to the buffer tank.

8. The apparatus of claim 3, wherein the pH measuring part further comprises:
a cleaning water inlet connected to an upper portion of a side surface of the buffer tank to introduce cleaning water into the buffer tank; and
a cleaning water outlet connected to a lower portion of the buffer tank to discharge the cleaning water introduced into the buffer tank.

9. The apparatus of claim 8, wherein the pH measuring part further comprises a water level sensor configured to measure a water level of each of the remainder accommodated in the buffer tank and the cleaning water.

10. The apparatus of claim 1, wherein the filter is provided as a metal filter.

11. The apparatus of claim 1, further comprising:
a stirrer configured to stir the raw material accommodated inside the coprecipitation reaction tank; and
a heater configured to apply heat to the raw material accommodated inside the coprecipitation reaction tank.

12. A method for preparing a precursor, which coprecipitation reacts a raw material to prepare the precursor, the method comprising:
an accommodating process of accommodating, in a coprecipitation reaction tank, the raw material configured to form an accommodated material comprising a reactant and a remainder; and
a pH measuring process of measuring a pH of the remainder,
wherein the pH measuring process comprises:
a filtering process of filtering the remainder from the accommodated material by a filter disposed inside the coprecipitation reaction tank; and
a measuring process of measuring the pH of the remainder, which is filtered through the filter, by a pH measuring part disposed outside the coprecipitation reaction tank.

13. The method of claim 12, wherein the measuring process comprises:
a remainder accommodating process of accommodating the remainder filtered through the filter in a buffer tank through a connecting pipe having one side portion connected to the filter and the other side portion connected to the pH measuring part; and
a sensor measurement process of measuring a pH of the remainder, which is accommodated the buffer tank, by a pH sensor of the pH measuring part.

14. The method of claim 13, wherein, in the remainder accommodating process, the remainder is moved from the filter to the buffer tank through a remainder moving pump provided on the connecting pipe.

15. The method of claim 13, wherein the measuring process comprises:
a cleaning water introducing process of introducing cleaning water into the buffer tank through a cleaning water inlet, which is connected to an upper portion of a side surface of the buffer tank, to clean the inside of the buffer tank when the remainder accommodated in the buffer tank is discharged after the sensor measurement process; and
a cleaning water discharge process of discharging the cleaning water, which is introduced into the buffer tank, through a cleaning water outlet connected to a lower portion of the buffer tank.

16. The method of claim 15, wherein, in the cleaning water introducing process, the cleaning water is introduced so that a water level of the cleaning water is higher than a water level of the remainder having introduced into the buffer tank through the remainder accommodating process.

17. The method of claim 12, further comprising:
a stirring process of stirring the raw material, which is accommodated inside the coprecipitation reaction tank, by a stirrer after the accommodating process; and
a heating process of applying heat to the raw material, which is accommodated inside the coprecipitation reaction tank, by a heater during the stirring process or before and during the stirring process.
